# NEUE EUROPÄISCHE PATENTSCHRIFT

(11) **EP 0 967 458 B2**
(45) Veröffentlichungstag und Bekanntmachung des Hinweises auf die Entscheidung über den Einspruch: **15.04.2015**
(45) Hinweis auf die Patenterteilung: 10.01.2007
(21) Anmeldenummer: 99112050.2
(22) Anmeldetag: 22.06.1999
(51) Int. Cl.: G01B 11/24, G06K 7/10, G02B 26/12

(54) **Optoelektronischer Sensor**
Opto-electronic sensor
Capteur opto-électronique

(30) Priorität: 26.06.1998 DE 29811486 U
(43) Veröffentlichungstag der Anmeldung: 29.12.1999
(73) Patentinhaber: SICK AG, 79183 Waldkirch (DE)
(72) Erfinder: Runge, Wolfram, Dr.-Ing., 79104 Freiburg (DE); Paske, Ralf, 79183 Waldkirch (DE)
(74) Vertreter: Manitz, Finsterwald & Partner GbR

(56) Entgegenhaltungen:
- EP-A- 0 450 643
- EP-A- 0 806 690
- WO-A1-91/06028
- DE-C1- 4 102 146
- JP-A- H05 284 580
- JP-A- H06 175 054
- US-A- 4 130 339
- US-A- 5 438 354
- US-A- 5 508 513
- US-A- 5 530 242
- US-A- 5 750 986
- US-A- 5 756 983

## Beschreibung

Die Erfindung betrifft einen optoelektronischen Sensor mit den Merkmalen des Oberbegriffs des Anspruchs 1.

Eine derartige Vorrichtung ist prinzipiell aus EP-A-450643 bekannt, wobei allerdings die bekannte Empfangseinrichtung einem anderen Zweck dient ("Elektrophotographie"). Ein Code-Leber entsprechend dem Oberbegriff des Anspruchs 1, nur ohne optische Umlenkeinheit, sondern mit mechanischen Synchronisation, ist aus US-A-5756983 bekannt.

Mit derartigen Sensoren können Objekte abgetastet und auf den Objekten angebrachte Markierungen, beispielsweise Barcodes, erkannt werden. Um abgetastete Objektinformationen auswerten zu können, ist eine Synchronisation der an die Empfangseinrichtung angeschlossenen Nachweis-und/oder Auswerteelektronik mit der periodischen Abtastbewegung des Fahrstrahles erforderlich. Dies bedeutet, daß der Beginn einer Abtastperiode, d. h. der Zeitpunkt, an dem ein aktiver Lesevorgang beginnt und von dem an reflektiertes bzw. rückgestreutes Licht ausgewertet wird, der mit der Empfangseinrichtung gekoppelten Elektronik mitgeteilt werden muß.

Es ist eine Aufgabe der Erfindung, einen optoelektronischen Sensor der eingangs genannten Art zu schaffen, der die Bestimmung des Beginns einer Abtastperiode gestattet.

Die Lösung dieser Aufgabe erfolgt durch die Merkmale von Anspruch 1.

Erfindungsgemäß erfolgt die Bestimmung des Beginns einer Abtastperiode, d. h. die Synchronisation, auf optoelektronischem Wege in einfacher und nahezu verzögerungsfreier Weise.

Durch die Anordnung der Umlenkeinheit innerhalb des Sendewinkelbereiches wird für die Umlenkeinheit innerhalb des Sensors kein zusätzlicher Platz benötigt. Weder die Ausdehnung des Sendewinkelbereiches noch die des Empfangsbereiches für reflektiertes bzw. rückgestreutes Licht werden durch die Umlenkeinheit in nennenswerter Weise beschränkt.

Gemäß der Erfindung umfaßt die Umlenkeinheit eine vorzugsweise als unregelmäßiges Vieleck ausgebildete, insbesondere viereckige Platte aus lichtdurchlässigem Material, insbesondere aus Kunststoff, die derart angeordnet ist, dass ihre Schmalseiten als Lichteintritts-, Lichtaustritts- und Reflexions Flächen (20, 26, 29, 30) für den von der Lichtquelle (10) ausgesandten Fahrstrahl (11) dienen.

Hierdurch wirkt die Platte als Lichtleiter, bei dem durch eine als Eintrittsfläche dienende Schmalseite einfallendes Licht durch Reflexion oder Totalreflexion an den anderen Schmalseiten in Richtung einer Austrittsfläche umgelenkt wird. Da eine derartige Lichtleiterplatte gleichzeitig Lichteintritts-, Lichtaustritts- und Reflexionsflächen bereitstellt sowie als Ausbreitungsmedium für das Licht dient, wird durch die Ausbildung der Umlenkeinheit als eine solche Lichtleiterplatte die Zahl der zur Umlenkung des Lichts erforderlichen Bauteile minimiert.

Des weiteren kann eine derartige Umlenkeinheit einfach und kostengünstig hergestellt werden.

Gemäß einer weiteren bevorzugten Ausführungsform der Erfindung verläuft die durch die Lichteintrittsfläche der Umlenkeinheit definierte Ebene zumindest näherungsweise senkrecht zu der Richtung, in die der Fahrstrahl vor Beginn oder nach Ende einer Abtastperiode durch die Lichtablenkeinheit ablenkbar ist.

Hierdurch weisen nicht die vergleichsweise großen Seitenflächen der vorzugsweise flachen Lichtleiterplatte, sondern lediglich deren Schmalseiten in die Richtung, in die der Fahrstrahl vor Beginn oder nach Ende einer Abtastperiode abgelenkt wird. Folglich wird nur ein minimaler Teil des Sendewinkelbereiches, der außerhalb eines aktiven Lesewinkelbereiches liegt, durch die Umlenkeinheit beeinflußt.

Bevorzugt ist die Lichtablenkeinheit als mit reflektierenden Spiegelfacetten versehenes, im Betrieb drehangetriebenes Polygonspiegelrad ausgebildet. Der von der Lichtquelle ausgesandte Lichtstrahl erzeugt auf den Facetten des Spiegelrades einen Lichtfleck mit einer endlichen Ausdehnung von z. B. wenigen Quadratmillimetern. Aufgrund dieser Ausdehnung wird zu Beginn jeder Abtastperiode vom in Drehrichtung vorderen Bereich der betreffenden Facette nur ein Teil des Lichtstrahls, nämlich nur der auf die betreffende Facette fallende Teil des Lichtflecks, in die gewünschte Richtung abgelenkt. Dieser Anteil des Lichtstrahls, d. h. der erste Fahrstrahl, ist in vielen Fällen von zu geringer Intensität und daher für Abtastzwecke ungeeignet oder nur bedingt geeignet. Entsprechendes gilt für einen letzten Fahrstrahl, der von einem in Drehrichtung hinteren Bereich der jeweiligen Facette reflektiert wird.

Daher ist gemäß einem weiteren bevorzugten Ausführungsbeispiel die Umlenkeinheit in einem Bereich angeordnet, in den der Fahrstrahl vor Beginn oder nach Ende einer Abtastperiode durch die Lichtablenkeinheit, insbesondere durch einen in Drehrichtung vorderen bzw. hinteren Randbereich einer reflektierenden Facette einer als drehbares Polygonspiegelrad ausgebildeten Lichtablenkeinheit, ablenkbar ist. Hierdurch wird es nämlich ermöglicht, einen nicht oder nur bedingt zur Abtastung verwendbaren ersten Fahrstrahl zu Synchronisationszwecken zu benutzen. Dadurch stehen praktisch alle vollständig von der jeweiligen Facette reflektierten Lichtstrahlen als für die eigentliche Abtastung geeignete Fahrstrahlen zur Verfügung, so daß fast der gesamte Sendewinkelbereich zum Abtasten, d. h. als aktiver Lesebereich genutzt werden kann.

Gemäß weiterer bevorzugter Ausführungsbeispiele der Erfindung ist eine Lichtaustrittsfläche der Umlenkeinheit an eine lichtempfindliche Fläche des Photodetektors angepaßt und/oder weist zumindest im wesentlichen die gleiche Größe wie die lichtempfindliche Fläche des Photodetektors auf, und/ oder die Projektion der Lichtaustrittsfläche der Umlenkeinheit auf die lichtempfindliche Fläche des Photodetektors in einer Richtung, die etwa senkrecht zu einer durch die Lichtaustrittsfläche definierten Ebene verläuft, liegt vollständig innerhalb der lichtempfindlichen Fläche des Photodetektors liegt.

Hierdurch wird erreicht, daß zumindest ein großer Teil des auf die Lichteintrittsfläche fallenden Lichts nach ein- oder mehrfacher Reflexion bzw. Totalreflexion an den Schmalseiten der Platte zum Photodetektor gelangt.

Gemäß einer weiteren bevorzugten Ausführungform der Erfindung ist die Platte mit einem bevorzugt senkrecht zur Platte verlaufenden Basiselement verbunden, das mit bevorzugt senkrecht abstehenden Positionierungszapfen zum Eingriff mit in einer Sensorplatine ausgebildeten Aussparungen versehen ist. Hierdurch wird es ermöglicht, ohne aufwendige Justierarbeiten die Umlenkeinheit an der gewünschten Stelle und in der erforderlichen Lage an einer vorgefertigten, mit Positionierungsbohrungen versehenen Platine zu fixieren. Insbesondere kann hierzu eine ohnehin vorhandene Sensorplatine dienen, so daß mit Ausnahme der Umlenkeinheit keine weiteren Bauteile benötigt werden.

Weitere vorteilhafte Ausgestaltungen der Erfindung sind in den Unteransprüchen, der Beschreibung und der Zeichnung angegeben.

Die Erfindung wird im folgenden beispielhaft unter Bezugnahme auf die Zeichnung beschrieben. Es zeigen:
- Fig. 1: eine schematische Teilansicht einer Ausführungform eines erfindungsgemäßen optoelektronischen Sensors in einer Ebene parallel zu einer Sendelichtfläche, und
- Fig. 2: eine schematische Seitenansicht der Umlenkeinheit gemäß Fig. 1 in einem an einer Sensorplatine fixierten Zustand.

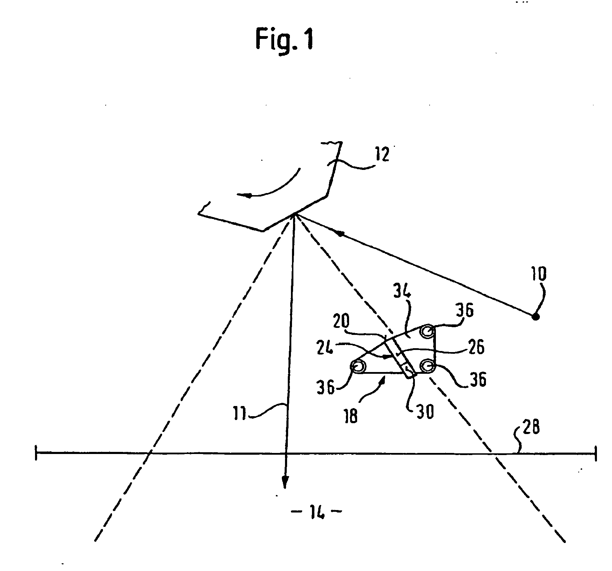

In der schematischen Darstellung einer Ausführungsform eines erfindungsgemäßen optoelektronischen Sensors gemäß Fig. 1 ist eine Lichtquelle 10, vorzugsweise ein Laser, vorgesehen, der einen kontinuierlichen oder gepulsten Lichtstrahl in Richtung einer als Polygonspiegelrad ausgebildeten, nur teilweise dargestellten Lichtablenkeinheit 12 aussendet.

Je nach Stellung des sich im Betrieb des optoelektronischen Sensors drehenden Spiegelrades 12 wird der Lichtstrahl von einer der reflektierenden Facetten des Spiegelrades 12 unter einem bestimmten Winkel innerhalb eines V-förmigen Sendewinkelbereiches 14 abgelenkt, der in Fig. 1 durch die gestrichelten Linien angedeutet ist. Der nach Ablenkung durch das Spiegelrad als Fahrstrahl 11 bezeichnete Lichtstrahl tritt durch ein Sensorfenster 28 aus dem Sensor aus.

Wenn sich das Spiegelrad 12 im Uhrzeigersinn dreht, wird der Fahrstrahl 11 vor Beginn jeder Abtastperiode zunächst von einem in Drehrichtung vorderen Bereich der betreffenden Facette in Richtung des in Fig. 1 rechten Endes, d. h. des Anfangs des Sendewinkelbereiches 14 abgelenkt.

Gegen Ende jeder Abtastperiode wird der Fahrstrahl 11 von einem in Drehrichtung hinteren Bereich der Facette in Richtung des in Fig. 1 linken Endes des Sendewinkelbereiches 14 abgelenkt und springt anschließend zurück an dessen Anfang.

Von einem abzutastenden Objekt reflektiertes und/oder rückgestreutes Licht fällt durch das Sensorfenster 28 auf das Spiegelrad 12 und wird von dessen Facetten auf eine nicht dargestellte Empfangseinrichtung gelenkt.

Die Empfangseinrichtung kann im Bereich der Lichtquelle 10 angeordnet sein. Im Lichtweg zwischen dem Polygonspiegelrad 12 und der Lichtquelle 10 kann ein halbdurchlässiger Spiegel angeordnet sein, der vom Spiegelrad 12 reflektiertes Empfangslicht auf eine an einer geeigneten Stelle angeordnete Empfangseinrichtung lenkt. Es ist auch möglich, die Empfangseinrichtung oberhalb oder unterhalb eines vergleichsweise dünnen Polygonspiegelrades anzuordnen.

Der von der Lichtquelle 10 ausgesandte Lichtstrahl erzeugt auf den Facetten des Spiegelrades 12 einen Lichtfleck mit einer endlichen Ausdehnung von z. B. wenigen Quadratmillimetern. Aufgrund dieser Ausdehnung wird vor Beginn oder nach Ende jeder Abtastperiode vom in Drehrichtung vorderen bzw. hinteren Bereich der betreffenden Facette nur ein Teil des Fahrstrahls 11, nämlich nur der auf die betreffende Facette fallende Teil des Lichtflecks, in die gewünschte Richtung abgelenkt. Dieser Anteil des Lichtstrahls 11, d. h. der erste bzw. letzte Fahrstrahl, ist in vielen Fällen von zu geringer Intensität und daher für Abtastzwecke ungeeignet oder nur bedingt geeignet.

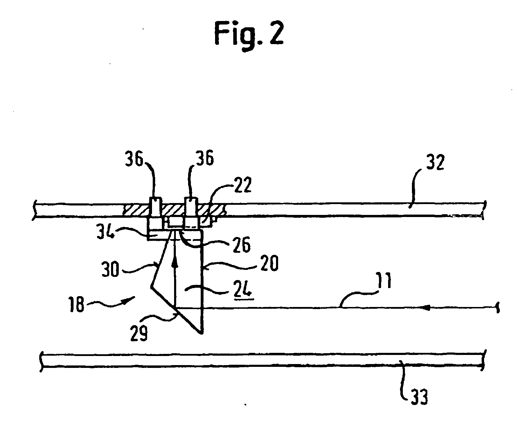

Eine Umlenkeinheit 18, die anhand von Fig. 2 ausführlicher beschrieben wird, weist eine dünne Platte 24 aus lichtdurchlässigem Kunststoff auf, deren eine Schmalseite als eine Lichteintrittsfläche 20 ausgebildet ist, die innerhalb des Sendewinkelbereiches 14, jedoch außerhalb eines nicht eingezeichneten aktiven Lesebereiches angeordnet ist. Die Lichteintrittsfläche 20 verläuft etwa senkrecht zu der Richtung, in die der Fahrstrahl vor Beginn jeder Abtastperiode abgelenkt wird. Folglich tritt in die Umlenkeinheit 18 dasjenige Licht etwa senkrecht durch die Lichteintrittsfläche 20 ein, d. h. es wird durch die Umlenkeinheit 18 nur dasjenige Licht aus dem Sendewinkelbereich ausgeblendet, welches in vielen Fällen zu Abtastzwekken ohnehin nicht verwendet werden kann.

In Fig. 1 sind ferner eine als Lichtaustrittsfläche 26, die senkrecht zur Lichteintrittsfläche 20 verläuft, sowie eine als Reflexionsfläche 30 ausgebildete Schmalseite der Platte 24 zu erkennen.

Des weiteren ist in Fig. 1 ein aus dem gleichen Material wie die Platte 24 hergestelltes und mit der Platte 24 verbundenes, etwa dreieckiges Basiselement 34 der Umlenkeinheit 18 dargestellt. Das Basiselement 34 ist mit drei jeweils in einer der Ecken angeordneten Positionierungszapfen 36 versehen, die zur Lagefixierung der Umlenkeinheit 18 innerhalb des Sensors in entsprechende Aussparungen einer in Fig. 1 nicht dargestellten Platine gesteckt werden können. Die Positionierungszapfen 36 stehen senkrecht vom Basiselement 34 ab.

Fig. 2 zeigt die Umlenkeinheit 18 in einem an einer Sensorplatine 32 fixierten Zustand, wobei die Positionierungszapfen 36 des parallel zur Platine 32 verlaufenden Basiselements 34 in Aussparungen der Platine 32 gesteckt sind. Parallel zu dieser Platine 32 erstreckt sich eine weitere Sensorplatine 33, an der das als Lichtablenkeinheit dienende Polygonspiegelrad (nicht dargestellt) angebracht sein kann. Der Sensor kann jedoch auch nur eine derartige Platine aufweisen, d. h. die Sandwichbauweise gemäß Fig. 2 mit parallel verlaufenden Platinen 32, 33 ist nicht zwingend erforderlich.

Die Platte 24 der Umlenkeinheit 18 ist als unregelmäßiges Viereck ausgebildet und erstreckt sich senkrecht zur Sensorplatine 32. Die Lichteintrittsfläche 20 der Platte 24 verläuft senkrecht zu einem einfallenden, vom Polygonspiegelrad reflektierten Fahrstrahl 11.

Die vom Polygonspiegelrad abgewandte, schräg unter einem Winkel von etwa 45° zur Platine 32 verlaufende Schmalseite 29 der Platte 24 dient wie die sich ebenfalls schräg zur Platine 32 erstreckende, an die Lichtaustrittsfläche 26 angrenzende Schmalseite 30 als Reflexionsfläche für durch die Lichteintrittsfläche 20 in die Platte 24 einfallendes Licht. Die Platte 24 dient somit als Lichtleiter, bei dem durch die Lichteintrittsfläche 20 einfallendes Licht sich durch ein- oder mehrfache Reflexion bzw. Totalreflexion an den Schmalseiten der Platte 24 in Richtung der Lichtaustrittsfläche 26 ausbreitet und auf diese Weise zur Lichtaustrittsfläche 26 gelenkt wird.

Die Platte 24 erstreckt sich durch das Basiselement 34 derart hindurch, daß die Lichtaustrittsfläche 26 der Platte 24 bündig mit der Basisplatte 34 auf der der Platine 32 zugewandten Seite abschließt.

Dadurch, daß sich die Platte 24 ausgehend von der Lichtaustrittsfläche 26 trichterartig verbreitert, kann die etwa unter 45° zur Lichteintrittsfläche 20 verlaufende Reflexionsfläche 29 - bei gleichbleibender Länge der Lichtaustrittsfläche 26 - eine größere Ausdehnung senkrecht zu den Sensorplatinen 32, 33 besitzen, ohne die Länge der Umlenkeinheit 18 in dieser Richtung zu vergrößern. Des weiteren kann diese Reflexionsfläche 29 eine wesentlich größere Länge als die Lichtaustrittsfläche 26 besitzen. Folglich kann mit der erfindungsgemäßen Umlenkeinheit 18 aus einem vergleichsweise großen Bereich senkrecht zu den Sensorplatinen 32, 33 stammendes Licht eingefangen und zu der vergleichsweise kleinen Lichtaustrittsfläche 26 gelenkt werden.

Zwischen der Lichtaustrittsfläche 26 und der Sensorplatine 32 ist ein Photodetektor 22 angeordnet, der an der Platine 32 zwischen Vorsprüngen fixiert und mit einer nicht dargestellten Synchronisationsschaltung verbunden ist. Die lichtempfindliche Fläche des Photodetektors 22 ist der Lichtaustrittsfläche 26 der Umlenkeinheit 18 zugewandt und erstreckt sich parallel zu dieser.

Bei einer Dicke der Platte 24 von etwa 1 mm besitzt die Lichteintrittsfläche 20 eine Länge von etwa 9,5 mm, die 45°-Reflexionsfläche 29 eine Länge von etwa 6,5 mm und die Lichtaustrittsfläche 26 eine Länge von etwa 2,5 mm. Die sich daraus ergebende Größe der Lichtaustrittsfläche 26 entspricht etwa der Größe der lichtempfindlichen Fläche handelsüblicher kostengünstiger Photodetektoren, wie sie bevorzugt für den Photodetektor 22 Verwendung finden.

Die Lichtaustrittsfläche 26 der Umlenkeinheit 18 ist etwa gleich groß wie die lichtempfindlichen Fläche des Photodetektors oder geringfügig kleiner. Die beiden Flächen sind relativ zueinander derart angeordnet, daß - bei Projektion der Lichtaustrittsfläche 26 auf die lichtempfindliche Fläche in einer Richtung senkrecht zu den Sensorplatinen 32, 33 - beide Flächen etwa zur Deckung kommen bzw. die Lichtaustrittsfläche 26 vollständig innerhalb der lichtempfindlichen Fläche liegt.

Im Betrieb des erfindungsgemäßen optoelektronischen Sensors wird der von der Lichtquelle 10 ausgesandte und vom sich im Uhrzeigersinn drehenden Polygonspiegelrad 12 reflektierte Fahrstrahl 11 periodisch innerhalb des Sendewinkelbereiches 14 abgelenkt.

Vor jeder eigentlichen Abtastperiode wird - wie vorstehend erläutert - nur ein Teil des Lichtstrahls 11 von der in dieser Abtastperiode wirksamen Spiegelfacette des Polygonspiegelrades 12 als Fahrstrahl 11 reflektiert. Dieser Teil des Fahrstrahls 11 fällt etwa senkrecht auf die Lichteintrittsfläche 20 der Umlenkeinheit 18 und wird in Richtung der Lichtaustrittsfläche 26 und somit auf die lichtempfindliche Fläche des Photodetektors 22 gelenkt.

Da die Platte 24 mit einer Dicke von etwa 1 mm in Blickrichtung des Sensors, d. h. in Richtung des vom Polygonspiegelrad 12 reflektierten Fahrstrahls 11, nur eine geringe Ausdehnung besitzt, kann bereits der erste oder zumindest einer der ersten vollständig reflektierten Abtastlichtstrahlen ungestört an der Platte 24 vorbei durch das Sensorfenster 28 gelangen und als erster Fahrstrahl 11 der Abtastperiode, d. h. des aktiven Lesevorgangs genutzt werden.

Mittels einer an den Photodetektor 22 angeschlossenen Schaltung wird das Licht zur Erzeugung eines Synchronisationspulses verwendet. Dieser gestattet es, die an die Empfangseinrichtung für von einem abgetasteten Objekt reflektiertes Licht angeschlossene Nachweis- und/oder Auswerteelektronik mit der Abtastbewegung des Fahrstrahls 11 zu synchronisieren, d. h. den Beginn jeder Abtastperiode zu bestimmen. Auf diese Weise kann jede im reflektierten bzw. rückgestreuten Licht enthaltene Information eindeutig einer bestimmten Abtastperiode zugeordnet werden.

Eine Nachweisschwelle der mit dem Photodetektor 22 verbundenen Synchronisationsschaltung kann so eingestellt sein, daß Licht, welches von nicht zumindest näherungsweise senkrecht auf die Lichteintrittsfläche 20 einfallenden Lichtstrahlen stammt und zum Photodetektor 22 gelangt, nicht ausreicht, um einen Synchronisationspuls zu erzeugen.

Grundsätzlich kann die Umlenkeinheit 18 auch an einer anderen Stelle des Sendewinkelbereiches 14 vor oder auch hinter dem eigentlichen aktiven Lesebereich angeordnet werden. Aus der relativen Lage der Umlenkeinheit 18 zum Polygonspiegelrad 12 ist die Winkelstellung bekannt, bei der der Fahrstrahl 11 etwa senkrecht auf die Lichteintrittsfläche 20 der Umlenkeinheit 18 fällt und ein Synchronisationspuls erzeugt wird. Aus der Umdrehungsgeschwindigkeit des Polygonspiegelrades 12 kann dann der Beginn jeder Abtastperiode abgeleitet werden.

### Bezugszeichenliste

- 10: Lichtquelle
- 11: Fahrstrahl
- 12: Lichtablenkeinheit (Polygonspiegelrad)
- 14: Sendewinkelbereich
- 18: Umlenkeinheit
- 20: Lichteintrittsfläche
- 22: Photodetektor
- 24: Platte
- 26: Lichtaustrittsfläche
- 28: Sensorfenster
- 29, 30: Reflexionsflächen
- 32, 33: Sensorplatinen
- 34: Basiselement
- 36: Positionierungszapfen

## Patentansprüche

1. Optoelektronischer Sensor mit
einer Lichtquelle (10) zum Aussenden eines Fahrstrahls (11),
einer Lichtablenkeinheit (12), die zur periodischen Ablenkung des Fahrstrahls (11) innerhalb eines Sendewinkelbereiches (14) ausgebildet ist,
einer Empfangseinrichtung zum Nachweisen von von einem abzutastenden Objekt reflektiertem und/oder rückgestreutem Licht und einer Umlenkeinheit (18), die eine zumindest bereichsweise innerhalb des Sendewinkelbereiches (14) angeordnete Lichteintrittsfläche (20) aufweist und zur Umlenkung von durch die Lichteintrittsfläche (20) einfallendem Licht auf einen Photodetektor (22) ausgebildet ist, der mit einer Synchronisationsschaltung zur Erzeugung eines Synchronisationspulses zur Bestimmung des Beginns einer Abtastperiode koppelbar ist,
**dadurch gekennzeichnet,**
**dass** die Umlenkeinheit (18) eine Platte (24) aus lichtdurchlässigem Material, insbesondere aus Kunststoff umfasst, die derart angeordnet ist, dass ihre Schmalseiten als Lichteintritts-, Lichtaustritts- und Reflexionsflächen (20, 26, 29, 30) für den von der Lichtquelle (10) ausgesandten Fahrstrahl (11) dienen.

2. Sensor nach Anspruch 1,
**dadurch gekennzeichnet,**
**daß** die Platte (24) als unregelmäßiges Vieleck ausgebildet ist insbesondere als viereckige Platte (24)

3. Sensor nach Anspruch 1 oder 2,
**dadurch gekennzeichnet,**
**daß** sich die Umlenkeinheit (18) ausgehend von einer Lichtaustrittsfläche (26) bevorzugt trichterartig verbreitert.

4. Sensor nach zumindest einem der vorhergehenden Ansprüche,
**dadurch gekennzeichnet,**
**daß** die Lichteintrittsfläche (20) der Umlenkeinheit (18) etwa senkrecht zu einer durch den periodisch abgelenkten Fahrstrahl (11) definierten Sendeebene verläuft.

5. Sensor nach zumindest einem der vorhergehenden Ansprüche,
**dadurch gekennzeichnet,**
**daß** eine Reflexionsfläche (29) der Umlenkeinheit (18) schräg unter einem Winkel von bevorzugt etwa 45° zu einer Sendeebene verläuft.

6. Sensor nach zumindest einem der vorhergehenden Ansprüche,
**dadurch gekennzeichnet,**
**daß** eine Lichtaustrittsfläche (26) der Umlenkeinheit (18) etwa parallel zu einer Sendeebene verläuft.

7. Sensor nach zumindest einem der vorhergehenden Ansprüche,
**dadurch gekennzeichnet,**
**daß** eine Lichtaustrittsfläche (26) der Umlenkeinheit (18) an eine lichtempfindliche Fläche des Photodetektors (22) angepaßt ist und/oder zumindest im wesentlichen die gleiche Größe wie die lichtempfindliche Fläche des Photodetektors (22) aufweist.

8. Sensor nach zumindest einem der vorhergehenden Ansprüche,
**dadurch gekennzeichnet,**
**daß** die Projektion der Lichtaustrittsfläche (26) der Umlenkeinheit (18) auf die lichtempfindliche Fläche des Photodetektors (22) in einer Richtung, die etwa senkrecht zu einer durch die Lichtaustrittsfläche (26) definierten Ebene verläuft, vollständig innerhalb der lichtempfindlichen Fläche des Photodetektors (22) liegt.

9. Sensor nach zumindest einem der vorhergehenden Ansprüche,
**dadurch gekennzeichnet,**
**daß** die Platte (24) der Umlenkeinheit (18) eine Dicke von etwa 0,5 bis 1,5 mm, bevorzugt etwa 1 mm, und/oder die Lichteintrittsfläche (20) eine Länge von etwa 5 bis 15 mm, insbesondere 9 bis 10 mm aufweist.

10. Sensor nach zumindest einem der vorhergehenden Ansprüche,
**dadurch gekennzeichnet,**
**daß** eine Lichtaustrittsfläche (26) der Umlenkeinheit (18) eine Länge von 1 bis 5 mm, bevorzugt etwa 2,5 bis 3 mm, und/oder eine Reflexionsfläche (29) der Umlenkeinheit (18) eine Länge von etwa 3 bis 10 mm aufweist.

11. Sensor nach zumindest einem der vorhergehenden Ansprüche,
**dadurch gekennzeichnet,**
**daß** die Umlenkeinheit (18) zur Fixierung an einer Sensorplatine (32) ausgebildet ist.

12. Sensor nach zumindest einem der vorhergehenden Ansprüche,
**dadurch gekennzeichnet,**
**daß** die Platte (24) der Umlenkeinheit (18) mit einem sich bevorzugt senkrecht zur Platte (24) erstreckenden Basiselement (34) verbunden ist, das mit bevorzugt senkrecht abstehenden Positionierungszapfen (36) zum Eingriff mit in einer Sensorplatine (32) ausgebildeten Aussparungen versehen ist.

13. Sensor nach zumindest einem der vorhergehenden Ansprüche,
**dadurch gekennzeichnet,**
**daß** die durch die Lichteintrittsfläche (20) der Umlenkeinheit (18) definierte Ebene zumindest näherungsweise senkrecht zu der Richtung verläuft, in die der Fahrstrahl (11) vor Beginn oder nach Ende einer Abtastperiode durch die Lichtablenkeinheit (12) ablenkbar ist.

14. Sensor nach zumindest einem der vorhergehenden Ansprüche,
**dadurch gekennzeichnet,**
**daß** die Umlenkeinheit (18) in einem Bereich angeordnet ist, in den der Fahrstrahl (11) vor Beginn oder nach Ende einer Abtastperiode durch die Lichtablenkeinheit, insbesondere durch einen in Drehrichtung vorderen bzw. hinteren Randbereich einer reflektierenden Facette einer als drehbares Polygonspiegelrad (12) ausgebildeten Lichtablenkeinheit, ablenkbar ist.

## Claims

1. An optoelectronic sensor comprising
a light source (10) for the transmission of a scanning beam (11),
a light deflection unit (12) formed for the periodic deflection of the scanning beam (11) within an angular transmission range (14),
a receiving device for detecting light reflected and/or back-scattered from an object to be scanned and a deflection unit (18) which has a light entry surface (20) arranged at least regionally within the angular transmission range (14), and which is formed for the deflection of light incident through the light entry surface (20) onto a photodetector (22) which can be coupled to a synchronization circuit to produce a synchronization pulse for the determination of the start of a scanning period,
**characterized in that**
the deflection unit (18) includes a plate (24) of light permeable material, in particular of plastic, which is arranged such that its narrow sides serve as light entry, light exit and reflection surfaces (20, 26, 29, 30) for the scanning beam (11) transmitted by the light source (10).

2. A sensor in accordance with claim 1, **characterized in that** the plate (24) is formed as an irregular polygon, in particular as a four-cornered plate (24).

3. A sensor in accordance with claim 1 or claim 2, **characterized in that** the deflection unit (18) widens, preferably in a funnel-like manner, starting from a light exit surface (26).

4. A sensor in accordance with at least one of the preceding claims, **characterized in that** the light entry surface (20) of the deflection unit (18) extends approximately perpendicular to a transmission plane defined by the periodically deflected scanning beam (11).

5. A sensor in accordance with at least one of the preceding claims, **characterized in that** a reflection surface (29) of the deflection unit (18) extends obliquely at an angle of preferably approximately 45° to a transmission plane.

6. A sensor in accordance with at least one of the preceding claims, **characterized in that** a light exit surface (26) of the deflection unit (18) extends approximately in parallel with a transmission plane.

7. A sensor in accordance with at least one of the preceding claims, **characterized in that** a light exit surface (26) of the deflection unit (18) is matched to a light sensitive surface of the photodetector (22) and/or has at least substantially the same size as the light sensitive surface of the photodetector (22).

8. A sensor in accordance with at least one of the preceding claims, **characterized in that** the projection of the light exit surface (26) of the deflection unit (18) onto the light sensitive surface of the photodetector (22) in a direction which extends approximately perpendicular to a plane defined by the light exit surface (26) lies fully within the light sensitive surface of the photodetector (22).

9. A sensor in accordance with at least one of the preceding claims, **characterized in that** the plate (24) of the deflection unit (18) has a thickness of approximately 0.5 to 1.5 mm, preferably of approximately 1 mm; and/or **in that** the light entry surface (20) has a length of approximately 5 to 15 mm, in particular 9 to 10 mm.

10. A sensor in accordance with at least one of the preceding claims, **characterized in that** a light exit surface (26) of the deflection unit (18) has a length of 1 to 5 mm, preferably of approximately 2.5 to 3 mm, and/or a reflection surface (29) of the deflection unit (18) has a length of approximately 3 to 10 mm.

11. A sensor in accordance with at least one of the preceding claims, **characterized in that** the deflection unit (18) is formed for fixing to a sensor circuit board (32).

12. A sensor in accordance with at least one of the preceding claims, **characterized in that** the plate (24) of the deflection unit (18) is connected to a base element (34) which preferably extends perpendicular to the plate (24) and is preferably provided with perpendicularly projecting positioning spigots (36) for engagement with cutouts formed in a sensor circuit board (32).

13. A sensor in accordance with at least one of the preceding claims, **characterized in that** the plane defined by the light entry surface (20) of the deflection unit (18) extends at least approximately perpendicular to the direction into which the scanning beam (11) can be deflected before the start of or after the end of a scanning period by the light deflection unit (12).

14. A sensor in accordance with at least one of the preceding claims, **characterized in that** the deflection unit (18) is arranged in a region into which the scanning beam (11) can be deflected by the light deflection unit before the start of or after the end of the scanning period, in particular by a marginal region at the front or rear with respect to the direction of rotation of a reflecting facet of a light deflecting unit formed as a rotatable polygonal mirror wheel (12).

## Revendications

1. Capteur optoélectronique comportant
une source lumineuse (10) pour émettre un rayon vecteur (11),
une unité de déflexion de lumière (12) qui est réalisée pour défléchir périodiquement le rayon vecteur (11) à l'intérieur d'une plage angulaire d'émission (14),
un dispositif de réception pour détecter de la lumière réfléchie par un objet à balayer et/ou de la lumière rétrodiffusée, et une unité de déviation (18) qui présente une surface d'entrée de lumière (20) agencée au moins par région dans la plage angulaire d'émission (14) et qui est réalisée pour dévier de la lumière incidente à travers la surface d'entrée de lumière (20) vers un photodétecteur (22) qui peut être accouplé à un circuit de synchronisation pour engendrer une impulsion de synchronisation pour déterminer le début d'une période de balayage,
**caractérisé en ce que** l'unité de déviation (18) comprend une plaque (24) en matériau transparent, en particulier en matière plastique, qui est agencée de telle façon que ses petits côtés servent de surfaces d'entrée de lumière, de sortie de lumière et de réflexion (20, 26, 29, 30) pour le rayon vecteur (11) émis par la source lumineuse (10).

2. Capteur selon la revendication 1, **caractérisé en ce que** la plaque (24) est réalisée sous forme de polygone irrégulier, en particulier sous forme de plaque (24) rectangulaire.

3. Capteur selon la revendication 1 ou 2, **caractérisé en ce que** l'unité de déviation (18) s'élargit de préférence en forme d'entonnoir en partant depuis une surface de sortie de lumière (26).

4. Capteur selon au moins l'une des revendications précédentes, **caractérisé en ce que** la surface d'entrée de lumière (20) de l'unité de déviation (18) s'étend approximativement perpendiculairement à un plan d'émission défini par le rayon vecteur (11) périodiquement dévié.

5. Capteur selon au moins l'une des revendications précédentes, **caractérisé en ce qu'**une surface de réflexion (29) de l'unité de déviation (18) s'étend en oblique sous un angle de préférence d'approximativement 45° par rapport à un plan d'émission.

6. Capteur selon au moins l'une des revendications précédentes, **caractérisé en ce qu'**une surface de sortie de lumière (26) de l'unité de déviation (18) s'étend approximativement parallèlement à un plan d'émission.

7. Capteur selon au moins l'une des revendications précédentes, **caractérisé en ce qu'**une surface de sortie de lumière (26) de l'unité de déviation (18) est adaptée à une surface photosensible du photodétecteur (22) et/ou présente au moins sensiblement la même taille que la surface photosensible du photodétecteur (22).

8. Capteur selon au moins l'une des revendications précédentes, **caractérisé en ce que** la projection de la surface de sortie de lumière (26) de l'unité de déviation (18) sur la surface photosensible du photodétecteur (22) est située, dans une direction qui s'étend approximativement perpendiculairement à un plan défini par la surface de sortie de lumière (26), entièrement à l'intérieur de la surface photosensible du photodétecteur (22).

9. Capteur selon au moins l'une des revendications précédentes, **caractérisé en ce que** la plaque (24) de l'unité de déviation (18) présente une épaisseur d'approximativement 0,5 à 1,5 mm, de préférence approximativement 1 mm, et/ou la surface d'entrée de lumière (20) présente une longueur d'approximativement 5 à 15 mm, en particulier 9 à 10 mm.

10. Capteur selon au moins l'une des revendications précédentes, **caractérisé en ce qu'**une surface de sortie de lumière (26) de l'unité de déviation (18) présente une longueur de 1 à 5 mm, de préférence approximativement de 2,5 à 3 mm, et/ou une surface de réflexion (28) de l'unité de déviation (18) présente une longueur d'approximativement 3 à 10 mm.

11. Capteur selon au moins l'une des revendications précédentes, **caractérisé en ce que** l'unité de déviation (18) est réalisée pour être fixée sur une platine de capteur (32).

12. Capteur selon au moins l'une des revendications précédentes, **caractérisé en ce que** la plaque (24) de l'unité de déviation (18) est reliée à un élément de base (34) s'étendant de préférence perpendiculairement à la plaque (24), lequel est pourvu de tenons de positionnement (36) faisant saillie de préférence perpendiculairement pour l'engagement avec des évidements réalisés dans une platine de capteur (32).

13. Capteur selon au moins l'une des revendications précédentes, **caractérisé en ce que** le plan défini par la surface d'entrée de lumière (20) de l'unité de déviation (18) s'étend au moins approximativement perpendiculairement à la direction dans laquelle le rayon vecteur (11) peut être dévié, avant le début ou après la fin d'une période de balayage, par l'unité de déviation de lumière (12).

14. Capteur selon au moins l'une des revendications précédentes, **caractérisé en ce que** l'unité de déviation (18) est agencée dans une région dans laquelle le rayon vecteur (11) peut être dévié avant le début ou après la fin d'une période de balayage, par l'unité de déviation de lumière, en particulier par une région de bord antérieure ou postérieure en direction de rotation, d'une facette réfléchissante d'une unité de déviation de lumière réalisée sous forme de roue à miroir polygonal (12) rotative.
